# EUROPÄISCHE PATENTSCHRIFT

(11) **EP 0 904 891 B1**
(45) Veröffentlichungstag und Bekanntmachung des Hinweises auf die Patenterteilung: **21.06.2006**
(21) Anmeldenummer: 98890226.8
(22) Anmeldetag: 04.08.1998
(51) Int. Cl.: B23Q 1/42, B23Q 1/58, B23Q 7/14

(54) **Schlitten für eine Führung**
Slide for a guide
Chariot pour dispositif de guidage

(30) Priorität: 27.08.1997 AT 144597
(43) Veröffentlichungstag der Anmeldung: 31.03.1999
(73) Patentinhaber: Deinhammer, Karl, 4650 Lambach (AT)
(72) Erfinder: Deinhammer, Karl, 4650 Lambach (AT)
(74) Vertreter: Patentanwälte BARGER, PISO & PARTNER

(56) Entgegenhaltungen:
- EP-A- 0 653 574
- EP-A- 0 682 188
- WO-A-97/27129
- CH-A- 586 589
- DE-A- 4 307 047
- GB-A- 2 059 820
- US-A- 2 452 804
- US-A- 4 856 415
- US-A- 4 941 758

## Beschreibung

Die Erfindung betrifft einen Schlitten für eine im wesentlichen rechteckige Führung mit einer Führungsachse gemäß dem Oberbegriff des Anspruches 1.

Ein derartiger Schlitten, allerdings für eine hexagonale Führungsschiene, ist aus der EP 0 682 188 A bekannt. Dabei wird zur Erreichung des Zieles der Erfindung, dem einfach einzustellendem Spiel zwischen Schlitten und Führung, zwingend gefordert, dass die Nut zwischen zwei Gleitstreifen und parallel zu ihnen verlaufen muß. In der Praxis, bei der vier Gleitstreifen vorgesehen sind, muß, wie in der Zeichnung dieser Druckschrift dargestellt, je eine Nut zwischen jeweils einem Paar von Gleitstreifen liegen.

Aus der US 4,856,415 A ist es für eine ähnliche Konstruktion ebenfalls bekannt, Lagerleisten mit kreissegmentförmigem Querschnitt zu verwenden, sie werden mit Lagerleisten mit rechteckigem Querschnitt kombiniert, wobei die Führung mit speziellen Verschleißflächen im Kontaktbereich versehen ist.

Aus der DE 43 07 047 A ist es für den Schlitten einer Linearführung allgemein bekannt, ihn durch elastische Deformation im Bereich einer Nut an die Linearführung zu pressen und damit zu fixieren. Das Anpressen kann dabei händisch, aber auch hydraulisch, pneumatisch oder magnetisch erfolgen.

Allgemein gesprochen, können derartige Führungen aus metallischen oder nicht-metallischen Werkstoffen bestehen, ihre Oberflächen sind gegebenenfalls gehärtet. Üblicherweise werden die Schlitten mit größter Präzision aus dem Vollen gefräst, dann geschliffen, anschließend feinbehandelt und die Oberfläche gehärtet. Derartige Schlitten sind entsprechend teuer und derartige Führungen für viele Anwendungsgebiete daher kaufmännisch nicht vertretbar.

Es gibt eine Reihe von Anwendungsgebieten, in denen die hohe Präzision, die mit den oben genannten Verfahren erreicht wird, nicht notwendig ist, doch sind Schlitten, die nach obigem Verfahren hergestellt sind, wenn sie nicht genau und mit geringsten Toleranzen hergestellt sind, den durch die größeren Toleranzen auftretenden Betriebsbedingungen nicht ausreichend gewachsen und sind darüberhinaus auch unabhängig von der Genauigkeit, mit der sie hergestellt werden, für solche Anwendungsgebiete noch immer zu teuer.

Aus der GB 2 059 820 A ist ein Schlitten bekannt, der an seiner Führung dadurch festgeklemmt werden kann, daß er Nuten oder Schlitze aufweist, die im wesentlichen parallel zur Führungslängsachse verlaufen und durch Schrauben od.dgl. aufgespreizt werden können, wodurch die Teile des Schlittens, die zwischen dem Schlitz und der Führung liegen, gegen die Führung gepreßt werden und so eine kraftschlüssige Klemmung des Schlittens an der Führung bewirken. Mit der Führung des Schlittens selbst, d.h. mit seiner Bewegung entlang der Führung hat diese Idee nichts zu tun.

Aus der SU 1397 236 A ist eine Vorrichtung bekannt, die die Idee der oben genannten GB-A weiter entwickelt: Das Festklemmen erfolgt durch einen Hebelmechanismus und nicht durch elastische Deformation, dabei wird die Klemmkraft von Federn aufgebracht und durch Aufbringen eines Druckfluides gelöst. Damit erreicht man eine definierte Klemmkraft, vermeidet übermäßige elastische Deformationen und Beanspruchungen des Materials und kann das Lösen und das Klemmen auf einfache Weise durch Steuern eines Hydraulikkreislaufes bewirken. Auch diese Druckschrift hat mit der Bewegung des Schlittens entlang der Führung selbst nichts zu tun.

Aus der DE 25 24 460 A ist es bekannt, bei Schwalbenschwanzfiihrungen zumindest an einer der einander gegenüberliegenden Flächen eine spezielle sogenannte Ausgleichsleiste anzubringen, die aus einem solchen Werkstoff besteht, daß sich im Betrieb diese Ausgleichsleiste und nicht die Führung abnutzt. Dies ist deswegen für wichtig gehalten worden, weil im üblichen Betrieb von Werkzeugmaschinen der Verschleiß an bestimmten Positionen besonders groß ist, da die meisten der Bewegungen in diesem Bereich, meistens ist es der mittlere, stattfinden. Die vorbekannte Druckschrift schlägt vor, eine Ausgleichsleiste aus Kunststoff zu verwenden, die auf ihrer Gleitfläche Vorsprünge aufweist und zumindest in diesem Bereich aus einem selbstschmierenden Material besteht. Durch diese Maßnahmen soll erreicht werden, daß die Leiste eng an den beweglichen Teil angelegt werden kann und an Stellen zu hoher Anpreßkraft durch Abtrag der Spitzen der Vorsprünge eine Art selbstjustierende Wirkung auswirkt.

Aus der AT 374 388 B ist eine Führung bekannt, bei der der Schlitten eine mehrteilig aufgebaute, die prismatische Führung umgreifende Gleitfläche aufweist, was es ermöglicht, diese Gleitflächen auf geometrisch relativ einfachen Elementen auszubilden, was naturgemäß billiger ist, als hinterschnittene Formen im Schlitten mit entsprechender Genauigkeit zu schaffen.

Die Erfindung betrifft das Zusammenwirken von Schlitten und Führung während der Bewegung des Schlittens und hat das Ziel, einen Schlitten anzugeben, der preisgünstig herstellbar ist und im Maschinen- und Anlagenbau, in der Handhabungstechnik und Ähnlichem die vorgegebenen Toleranzen im Bereich von einigen Zehntelmillimetem Führungsspiel ausreichend genau mit geringen Kosten einhält und für die bisher üblichen Anwendungsgebiete, die dort notwendigen engen Toleranzen, bis hin zu vorgespannten Führungen, wesentlich kostengünstiger erreicht als es bisher möglich war.

Erfindungsgemäß werden diese Ziele durch die kennzeichnenden Merkmale des Anspruches 1 erreicht.

Damit wird es möglich, die Lage des Schlittens bezüglich der Führung wesentlich genauer einzustellen als bei den Vorrichtungen gemäß dem Stand der Technik.

Die Lagerleisten sind entweder aus einem Material mit den passenden Lagereigenschaften, beispielsweise aus trockenlauffähigem Kunststoff und haben eine glatte oder strukturierte Lauffläche, oder sie weisen Wälzkörper auf, deren Drehachsen normal zur Leistenachse und parallel zur Führungsebene angeordnet sind. Selbstverständlich können auch Schmierstoffe verwendet werden.

Die Erfindung wird im folgenden anhand eines Beispieles näher erläutert. Dabei zeigt
die Fig. 1 eine schematische Ansicht eines Schlittens auf einer Führung,
die Fig. 2 den Schlitten der Fig. 1 in umgedrehter Lage in größerem Maßstab,
die Fig. 3 ein Detail im Bereich einer Bohrung,
die Fig. 4 eine Lagerleiste im Detail und
die Fig. 5 das Wirkschema der Spreizelemente.

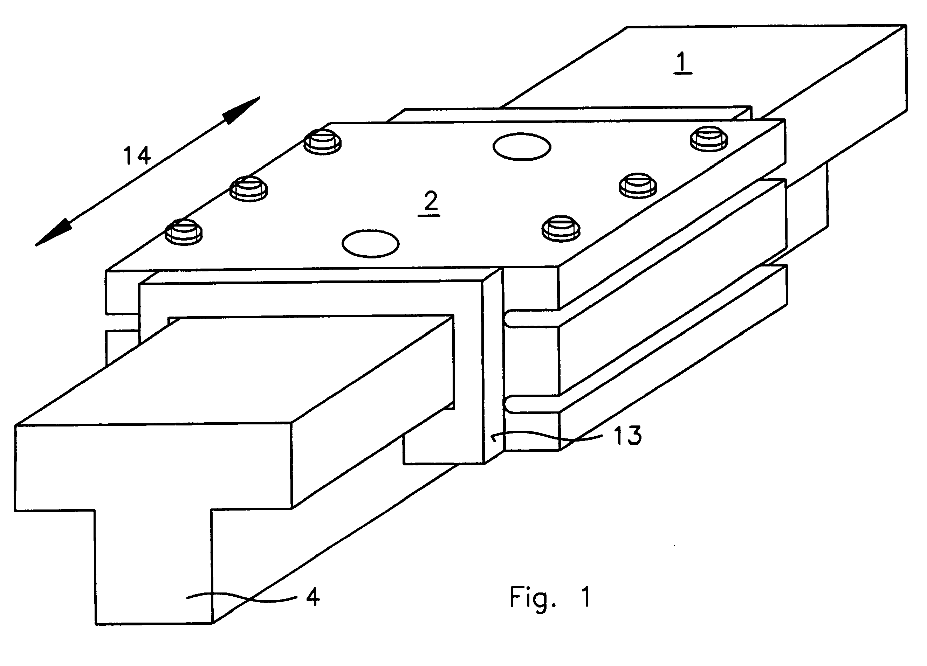

Aus Fig. 1 ist eine Führung 1 in Form eines Rechteckstabes mit einem Befestigungssteg 4 ersichtlich, auf der ein Schlitten 2, der an jeder Stirnseite eine Abdeckplatte 13 trägt, längsverschieblich angeordnet ist. Statt des Steges 4 können selbverständlich andere Befestigungselemente, wie Abstandhalter od.dergl. verwendet werden.

Anwendungsbeispiele für derartige Anordnungen sind Werkzeugmaschinen, Handhabungsapparate und Automaten in der industriellen Fertigung, Verstelleinheiten für Anschlaglineale, Schweißspiegel und Schlittenführungen in der Kunststoffindustrie und der Holzverarbeitenden Industrie, verstellbare Anschläge bei Blechbearbeitungsmaschinen, Bearbeitungs- und Abfüllanlagen in der chemischen Industrie, der Lebensmittelindustrie und der Getränkeindustrie, Führungen für Spannelemente, Schleusen bei Wasserkraftanlagen od.dergl.. Auch in schmutziger Umgebung, in der Wald- und Forstwirtschaft, der Landwirtschaft und der chemischen Industrie ist die Erfindung vorteilhaft einsetzbar.

Es kann dabei entweder der Schlitten von einem Element bewegt werden und dient beispielsweise als Träger für ein Werkzeug oder Instrument, oder es kann umgekehrt die Führung entlang mehrerer fix montierter Schlitten bewegt werden. Der Antrieb kann elektrisch, pneumatisch hydraulisch oder mechanisch erfolgen.

Die Führung muß nicht die dargestellte Form aufweisen, sondern kann eine Schwalbenschwanzführung od.dergl. sein. Bei einer bevorzugten Ausführungsform besteht die Führung aus einem Formrohr, das beispielsweise auch aus Aluminium sein kann und auf das Laufflächen aus Federstahl aufgebracht (geklebt, genietet, etc.) sind. Die dabei auf einfachste Weise zu erreichenden Toleranzen sind bei Verwendung des erfindungsgemäßen Schlitten zumeist völlig ausreichend.

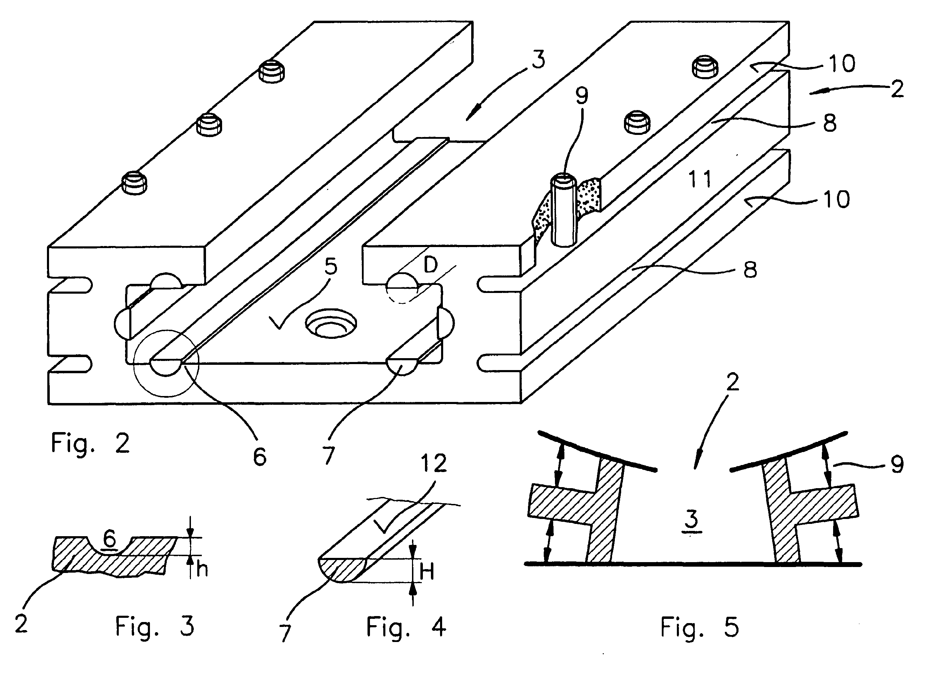

In Fig. 2 ist ein erfindungsgemäßer Schlitten 2 in vergrößertem Maßstab gegenüber der Fig. 1 und in umgedrehter, auf den Rücken gelegter, Lage ohne die Abdeckplatten 13 dargestellt.

Der Schlitten 2, der die Führung 1 im wesentlichen umgreift, besteht im wesentlichen aus einem prismatischen Block, in den eine längsdurchgehende Öffnung 3 eingearbeitet, bevorzugt eingefräst, ist, die im wesentlichen den Außenkonturen der Führung 1 entspricht, aber einen etwas größeren Querschnitt aufweist. Um die Halterungen 4 der Führung 1 passieren zu können, ist diese Durchgangsöffnung 3 auf der entsprechenden Seite bis zur Außenfläche des Blockes geführt, so daß der Schlitten 2 einen Querschnitt ähnlich einem liegenden C aufweist.

Auf den der Führung 1 zugewandten Oberflächen, die in ihrer Gesamtheit mit 5 bezeichnet sind, weist der Block kreissegmentförmige Ausnehmungen 6 auf, in die kreissegmentförmige Lagerleisten 7 eingelegt sind. Am Schlitten sind je zwei Lagerleisten 7 den längeren Seiten und je eine Lagerleiste 7 den kürzeren Seiten der Führung 1 zugeordnet. Die Durchmesser der kreissegmentförmigen Ausnehmungen und der kreissegmentförmigen Lagerleisten sind gleich, die Bogenhöhen H der Lagerleisten 7 sind größer als die Bögenhöhen h der Ausnehmungen 6, wie aus den Fig. 3 und 4 ersichtlich ist.

Die Herstellung des Schlittens 2 erfolgt dadurch, daß die den Ausnehmungen 6 entsprechenden kreisförmigen Löcher parallel zur Führungsachsee 14 in den vollen Block gebohrt werden und daß sodann die Durchgangsöffnung 3 ausgefräst wird, wodurch von den Löchern nur die kreissegmentförmigen Ausnehmungen 6 verbleiben. Da der Schlitten 2 nirgendwo direkten Kontakt mit der Führung 1 hat, sondern ihn nur durch die in die kreissegmentförmigen Ausnehmungen 6 eingelegten Lagerleisten 7 berührt, bedürfen nur diese Lagerleisten und die kreissegmentförmigen Ausnehmungen 6 der nötigen höchsten Präzision bei der Herstellung.

Es ist selbverständlich möglich, den Block durch Druckgießen oder Feingießen herzustellen, wobei gegebenenfalls nur mehr die kreissegmentförmigen Ausnehmungen 6 einer Nachbearbeitung bedürfen.

Dazu kommt noch, daß bei Verwendung des bevorzugten Materials für die Lagerleisten 7, eines modifizierten Polyäthylentherephtalats oder vergleichbarer Werkstoffe, zufolge der elastischen Eigenschaften dieses Produktes, die Toleranzen wesentlich größer sein können als es gemäß dem Stand der Technik zu erwarten war.

Schrägstellungen und Winkelfehler der Führung 1 werden dadurch leicht ausgeglichen, daß die Lagerleisten 7 in den kreissegmentförmigen Ausnehmungen 6 verschwenkbar sind, so daß das Klemmen von Kanten, sowie das Verkanten überhaupt, zuverlässig vermieden werden kann und die Kontaktflächen 12 immer flächig an der Führung 1 aufliegen.

Diese Kontaktflächen 12 können eine strukturierte Oberfläche aufweisen, beispielsweise durch Anbringen von Kreuznuten, die bezüglich der Führungsachse schräg angeordnet sind und einander kreuzen. Derartige Nuten können beispielsweise einen im wesentlichen halbkreisförmigen Querschnitt aufweisen und begünstigen die Entfernung von Schmutzpartikeln von der Kontaktfläche.

In einer vorteilhaften Ausgestaltung der Erfindung bestehen die Ausnehmungen 6 und damit auch die Lagerleisten 7 aus Kreissegmenten, deren Höhen h, H größer sind als der halbe Durchmesser D und so die Lagerleisten am Herausfallen aus den Ausnehmungen hindern.

Bevorzugt werden die Lagerleisten 7 in die Ausnehmungen 6 nur eingelegt und gegen ein axiales Verschieben durch Anbringen der Deckplatten 13, deren Durchgangsöffnung gegebenenfalls einen etwas geringeren Querschnitt hat als die Durchgangsöffnung 3, aber noch immer so groß ist, daß sie die Führung 1 nirgendwo berührt, festgehalten. Diese Deckplatten 13 können, wenn es das Einsatzgebiet als günstig erscheinen läßt, auch als Schmutzabstreifer ausgebildet sein.

Eine bevorzugte Ausführungsform des Schlittens weist die aus Fig. 2 ersichtlichen seitlichen, durchgehenden Nuten 8 und die zugehörigen Spreizmittel 9 auf, um eine einfache und billige Justierung des Schlittens beziehungsweise seiner Lagerleisten und noch genauer der Kontaktflächen 12 bezüglich der Führung zu ermöglichen, wobei je zwei Nuten 8 an jenen Seiten des Schlittens 2 vorgesehen sind, die den kürzeren Seiten der Führung 1 zugeordnet sind.

In Fig. 5 ist die Wirkung dieser Spreizmittel übertrieben dargestellt und macht dadurch ihre Wirkung deutlich: Durch Betätigen der Spreizmittel, bevorzugt sind dies Schrauben, die in den äußeren Stegen 10 einschraubbar sind und gegen den Mittelsteg 11 drücken, werden, durch Biegen in Bereichen bzw. Schwenken um Pseudoachsen, die sich durch den Kraftverlauf und die Form des Blockes bestimmen, die einander gegenüberliegenden Lagerleisten 7 auf der der Führung 1 zugewandten Oberfläche 5 im Inneren der Längsausnehmung 3 zueinander und somit zur Führung 1 hin bewegt und umfassen diese mit der gewünschten Toleranz. Die dabei aus Fig. 5 ersichtliche und dort übertrieben dargestellte Winkeländerung der Oberfläche des Blockes des Schlittens 2 spielt wegen der Drehbarkeit der Lagerleisten 7 in ihren Längsnuten 6 keine Rolle, die (ebenen) Kontaktflächen 12 (Fig. 4) der Lagerleisten 7 stellen sich immer richtig bezüglich der Oberfläche der Führung 1 an.

Wenn die Spreizelemente leicht, beispielsweise hydraulisch, betätigbar sind, so kann auf diese Weise der Schlitten 2 an gewünschten Stellen der Führung durch Betätigen der Spreizmittel fixiert, d.h. festgeklemmt werden, ohne daß sein Antrieb dazu ausgelegt sein muß. Dies ist insbesondere dann auf einfache Weise zu erzielen, wenn die Spreizmittel hydraulisch verstellbar sind, unabhängig davon, ob es sich um Spreizkolben handelt oder ob die Hydraulik auf Keile oder Nocken wirkt.

Es ist selbstverständlich auch möglich, das Prinzip auf eine Schwalbenschwanzführung oder eine doppelte Prismenführung anzuwenden. In Kenntnis der Erfindung kann der Fachmann auf diesem Gebiete auch die Anordnung und Dimensionierung der Nuten 8 bzw. der Stege 10 und 11 vornehmen.

Es ist sogar möglich, einen Schlitten für eine Kreisführung mit der erfindungsgemäßen Methode zu verwirklichen, wozu nur drei Bohrungen für die Schaffung der Kreissegmentausschnitte 6 und eine anschließende Ausbohrung für die Kreisführung notwendig sind. Die Kontaktflächen 12 der Lagerleisten sind in diesem Fall selbverständlich nicht eben sondern der Zylinderform der Kreisführung angepaßt.

Der Schlitten 2 kann aus jedem genügend steifen und den mechanischen und sonstigen Anforderungen genügenden Material bestehen, die Lagerleisten 7, wie oben ausgeführt, aus speziellem Kunststoff oder aus einem anderen tauglichen u.U. auch metallischen Material, das insbesondere auf die entsprechenden Einsatzgebiete abzustimmen ist, sein, wie dies aber bereits aus dem Stand der Technik bekannt ist. Es ist insbesondere auf die auftretenden Kräfte, somit die wirkenden Drücke und die auftretenden Geschwindigkeiten zu achten, wobei unter Umständen auch auf die Temperaturgrenzen, innerhalb derer die erfindungsgemäße Vorrichtung zum Einsatz kommt, zu berücksichtigen sind.

Es kann, wenn eine geschmierte Führung möglich ist, an Schmiermittel Fett, Öl, aber auch Wasser, beispielsweise in der Lebensmittelindustrie oder bei Wasserkraftanlagen und im Zusammenhang mit nicht korrodierenden Material der Führung 1 des Schlittens 2 und der Lagerleisten 7 verwendet werden. Es können für die Lagerleisten 7 neben trockenlauffähigen Materialien auch selbstschmierende Materialien verwendet werden, die bei der Inbetriebnahme zufolge des ersten Verschleißes das in ihnen enthaltene Schmiermittel absondern, was es bevorzugt sein läßt, in diesem Fall einen gewissen Anpreßdruck (Vorspannung) zwischen Lagerleisten 7 und der Führung 1 vorzusehen.

Besonders bevorzugt als Material für die Lagerleisten werden modifizierte Polyäthylenterephtalate wie sie von der Wolf Kunststoff Gleitlager GmbH in D-50169, Kerpen-Türnich unter der Bezeichnung ZX im Verbund mit verschiedenen Seriennummern und unter der Bezeichznung ZEDEX, ebenfalls im Verbund mit verschiedenen Seriennummern, vertrieben werden.

## Patentansprüche

1. Schlitten (2) für eine rechteckige, prismatische oder schwalbenschwanzförmige Führung (1) mit einer Führungsachse (14), wobei der Schlitten (2) in seinem der Führung (1) zugewandten Oberflächenbereich (5) kreissegmentförmige, in Richtung der Führungsachse (14) verlaufende Ausnehmungen (6) aufweist, in die ebenfalls kreissegmentförmige Lagerleisten (7) eingelegt sind, wobei die Lagerleisten den gleichen Durchmesser (D) wie die Ausnehmungen, aber eine größere Segmenthöhe (H) als diese (h) aufweisen, wobei der Schlitten (2) entlang seiner äußeren Oberfläche durchgehende Nuten (8), die parallel zur Führungsachse (14) verlaufen, aufweist, wobei den Nuten Spreizelemente (9) zugeordnet sind, die die Nuten (8) in bestimmbarem Ausmaß aufspreizen, **dadurch gekennzeichnet, dass** am Schlitten (2) je zwei Lagerleisten (7) den längeren Seiten und je eine Lagerleiste (7) den kürzeren Seiten der Führung (1) zugeordnet sind und dass je zwei Nuten (8) an jenen Seiten des Schlittens (2) vorgesehen sind, die den kürzeren Seiten der Führung (1) zugeordnet sind.

2. Schlitten nach Anspruch 1, **dadurch gekennzeichnet, daß** die Segmenthöhe (h) der Ausnehmung (6) größer ist als deren halber Durchmesser (D).

3. Schlitten nach einem der Ansprüche 1 oder 2, **dadurch gekennzeichnet, daß** er zumindest eine axiale Abdeckplatte (13) aufweist, die die Lagerleisten (7) axial fixiert.

4. Schlitten nach einem der vorstehenden Ansprüche, **dadurch gekennzeichnet, daß** die Spreizmittel (9) Stellschrauben sind.

5. Schlitten nach einem der Ansprüche 1 bis 3, **dadurch gekennzeichnet, daß** die Spreizmittel (9) hydraulisch betätigbare Spreizzylinder oder hydraulisch verschiebliche Keile oder betätigbare Nocken sind, und daß die Spreizkräfte selektiv so stark einstellbar sind, daß der Schlitten (2) an der Führung (1) festgeklemmt ist.

6. Schlitten nach einem der vorstehenden Ansprüche, **dadurch gekennzeichnet, daß** die Lagerleisten (7) aus trockenlauffähigem Material, insbesondere aus Kunststoff, bestehen.

7. Schlitten nach Anspruch 6, **dadurch gekennzeichnet, daß** die Lagerleisten (7) aus modifiziertem Polyäthylentherephtalat bestehen.

8. Schlitten nach einem der Ansprüche 6 oder 7, **dadurch gekennzeichnet, daß** die Kontaktflächen (12) der Lagerleisten (7) strukturiert, beispielsweise mit Kreuznuten versehen, sind.

## Claims

1. A slide (2) for a rectangular, prismatic or dovetail guide (1) with a guide axis (14), wherein in its surface region (5) facing the guide (1) the slide (2) has circular segment-shaped recesses (6) which extend in the direction of the guide axis (14) and in which likewise circular segment-shaped bearing strips (7) are inserted, wherein the bearing strips (7) are of the same diameter (D) as the recesses but have a greater segment height (H) than the latter (h), wherein the slide (2) has grooves (8) which are continuous along its outer surface and which extend parallel to the guide axis (14), wherein the grooves are associated with expanding elements (9) which expand the grooves (8) to an extent which can be determined, **characterised in that** on the slide (2) each two bearing strips (7) are associated with the longer sides and each bearing strip (7) is associated with the shorter sides of the guide (1), and **in that** each two grooves (8) are provided on those sides of the slide (2) which are associated with the shorter sides of the guide (1).

2. A slide according to Claim 1, **characterised in that** the segment height (h) of the recess (6) is greater than half its diameter (D).

3. A slide according to either Claim 1 or Claim 2, **characterised in that** it has at least one axial cover plate (13) which axially locates the bearing strips (7).

4. A slide according to any one of the preceding Claims, **characterised in that** the expanding means (9) are set screws.

5. A slide according to any one Claims 1 to 3, **characterised in that** the expanding means (9) are expanding cylinders which can be hydraulically actuated or are hydraulically displaceable wedges or hydraulically actuated cams, and **in that** the expanding forces can be adjusted selectively to be of such magnitude that the slide (2) is clamped to the guide (1).

6. A slide according to any one of the preceding Claims, **characterised in that** the bearing strips (7) consist of dry-running material, in particular of plastics material.

7. A slide according to Claim 6, **characterised in that** the bearing strips (7) consist of modified polyethylene terephthalate.

8. A slide according to either Claim 6 or Claim 7, **characterised in that** the contact surfaces of the bearing strips (7) are textured, for example provided with cross-grooves.

## Revendications

1. Chariot (2) pour un guidage (1) rectangulaire, en Vé, ou en forme de queue d'aronde, présentant un axe de guidage (14), où le chariot (2) comporte, dans la partie de sa surface (5) qui est tournée vers le guidage (1), des évidements (6) en forme de segment de cercle s'étendant dans le sens de l'axe de guidage (14), dans lesquels sont insérées des baguettes d'appui (7) se présentant également sous forme de segments de cercle, les baguettes d'appui ayant le même diamètre (D) que les évidements, mais ayant une hauteur de segment (H) qui est supérieure à celle (h) de ces derniers, le chariot (2) comportant, dans sa face extérieure, des gorges continues (8) qui s'étendent parallèlement à l'axe de guidage (14), des éléments écarteurs (9) étant associés aux gorges (8), pouvant écarter les gorges d'une valeur prédéterminée,
**caractérisé en ce que**, sur le chariot (2), deux baguettes d'appui (7) sont respectivement associées aux côtés plus longs, et respectivement une baguette d'appui (7) est associée aux côtés plus courts du guidage (1), et que deux gorges (8) sont prévues sur les côtés du chariot (2), auxquels correspondent les côtés plus courts du guidage (1).

2. Chariot selon la revendications 1, **caractérisé en ce que** la hauteur de segment (h) de l'évidement (6) est supérieure au demi diamètre (D) de celui-ci.

3. Chariot selon l'une des revendications 1 ou 2, **caractérisé en ce qu'**il comporte au moins une plaque de couverture axiale (13) qui arrête les baguettes d'appui (7) dans le sens axial.

4. Chariot selon l'une des revendications précédentes, **caractérisé en ce que** les moyens écarteurs (9) sont des vis de réglage.

5. Chariot selon l'une des revendications 1 à 3, **caractérisé en ce que** les moyens écarteurs (9) sont des vérins écarteurs à actionnement hydraulique ou des coins ou des cames à commande hydraulique, et que les forces d'écartement peuvent être réglées de façon sélective de manière telle que le chariot (2) se trouve serré en arrêt sur le guidage (1) .

6. Chariot selon l'une des revendications précédentes, **caractérisé en ce que** les baguettes d'appui (7) sont faites d'une matière de glissement à sec, en particulier d'une matière plastique.

7. Chariot selon la revendication 6, **caractérisé en ce que** les baguettes d'appui (7) sont faites de polyéthylène-téréphtalate modifié.

8. Chariot selon l'une des revendications 6 ou 7, **caractérisé en ce que** les surfaces de contact (12) des baguettes d'appui (7) sont texturées, par exemple pourvues de rainures croisées.
